Europäisches Patentamt

(19) European Patent Office

Office européen des brevets

(11) Numéro de publication : **0 313 445 B1**

(12) **FASCICULE DE BREVET EUROPEEN**

(45) Date de publication du fascicule du brevet :
20.03.91 Bulletin 91/12

(51) Int. Cl.⁵ : **F16B 5/06, // B60N3/04**

(21) Numéro de dépôt : **88402603.0**

(22) Date de dépôt : **13.10.88**

(54) **Agrafe de fixation d'un tapis sur un plancher.**

(30) Priorité : **20.10.87 FR 8714460**

(43) Date de publication de la demande :
**26.04.89 Bulletin 89/17**

(45) Mention de la délivrance du brevet :
**20.03.91 Bulletin 91/12**

(84) Etats contractants désignés :
**DE ES GB IT**

(56) Documents cités :
**DE-B- 1 120 908**
**FR-A- 1 178 895**
**FR-A- 1 384 230**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Chaintreuil, René**
**20 Avenue Aristide Briand**
**F-25400 Audincourt (FR)**

(74) Mandataire : **Durand, Yves Armand Louis et al**
**CABINET WEINSTEIN 20, Avenue de**
**Friedland**
**F-75008 Paris (FR)**

EP 0 313 445 B1

## Description

La présente invention se rapporte d'une manière générale aux agrafes, et concerne plus particulièrement une agrafe de fixation d'un élément plus ou moins rigide tel que par exemple un tapis sur une surface telle que par exemple un plancher de véhicule.

Pour fixer un tapis sur un plancher de véhicule, on a déjà proposé divers types d'attaches en plastique ou en métal qui exigent souvent le perçage de la feuillure du longeron qui s'étend sur les côtés du plancher du véhicule. Comme on le comprend, l'opération de perçage prend du temps, nuit à l'étanchéité et n'est pas souhaitable.

On a également proposé des agrafes métalliques ou en matière plastique qui se clippent sur la feuillure de longeron, mais qui ne permettent pas une fixation satisfaisante et solide du tapis sur le plancher du véhicule, lequel tapis est évidemment constamment sollicité par les pieds du conducteur et des passagers.

C'est ainsi que l'on connaît d'après le document DE-B-1 120 908 des agrafes du type décrit dans le préambule de la revendication 1 et aptes à se clipper sur un rebord formant feuillure pour y retenir un élément.

La présente invention a pour but de remédier aux inconvénients des agrafes antérieures en proposant une agrafe n'exigeant aucun perçage préalable pour permettre la fixation du tapis, ni encollage éventuel de ce tapis, et assurant une fixation très solide et sans risque de glissement du tapis sur le plancher du véhicule.

A cet effet, l'invention a pour objet une agrafe de fixation d'un élément tel que par exemple un tapis ou analogue sur une surface telle que par exemple un plancher de véhicule, et du type comprenant une première partie repliée sur elle-même et apte à se clipper sur un rebord formant par exemple une feuillure, et une deuxième partie raccordée orthogonalement à la première partie et apte à retenir ledit élément sur ladite surface, caractérisée en ce que ladite deuxième partie se compose de deux flans espacés et décalés dans le plan vertical et horizontal, ces deux flans étant séparés et raccordés par une partie de pontage qui permet l'insertion de la tranche de l'élément entre les deux flans puis leur fixation sur ledit élément par mise en parallèle des deux flans avec l'élément sous l'effet d'une rotation de l'agrafe, des griffes associés aux flans s'accrochant à l'élément.

Suivant une autre caractéristique de l'invention, la partie de pontage est repliée sur elle-même et présente sensiblement en section transversale la forme d'un S constituant deux clips inversés permettant respectivement la retenue de la partie de pontage sur la feuillure et la retenue d'un élément constituant par exemple un profilé de garniture.

On précisera encore ici qu'une agrafe selon cette invention peut être munie d'un système de manoeuvre, tel que par exemple une poignée.

Chaque flan précité comporte au moins une griffe réalisée par repliement du flan.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 illustre en perspective une agrafe conforme à l'invention et son montage sur un rebord formant feuillure ;

La figure 2 est une vue en coupe transversale faite suivant la ligne II-II de la figure 1 ; et

La figure 3 illustre le montage de l'agrafe sur un tapis avant son clippage sur la feuillure.

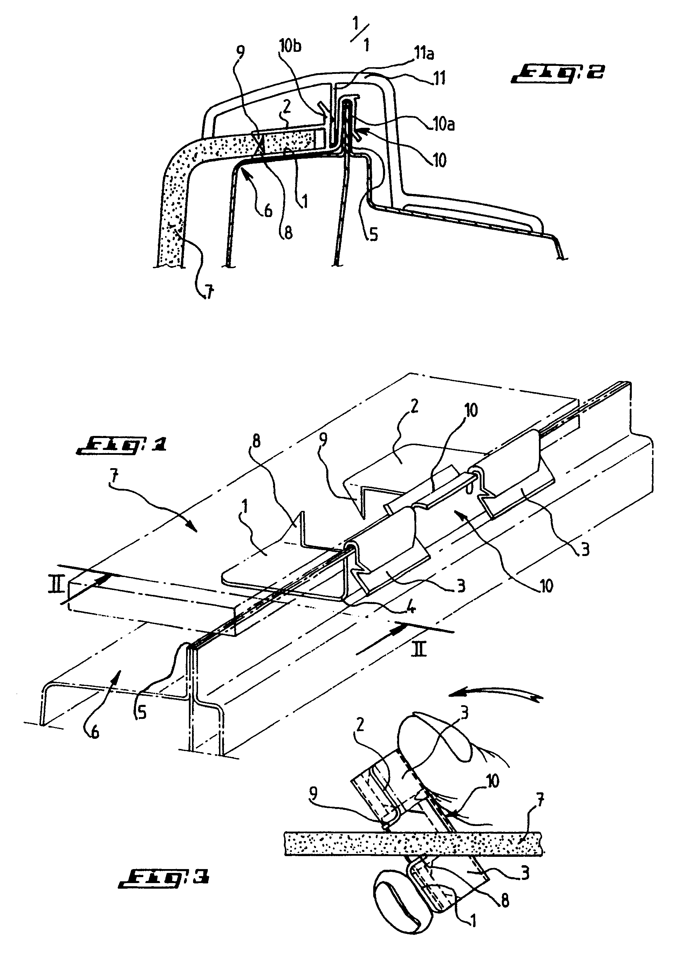

Suivant un exemple de réalisation, et en se reportant plus particulièrement à la figure 1, on voit qu'une agrafe conforme à cette invention et réalisée en acier à ressort se compose essentiellement de deux flans 1, 2 espacés ou décalés dans le plan vertical et raccordés chacun sensiblement orthogonalement, comme on le voit en 4, à une partie 3 repliée sur elle-même et apte à se clipper sur un rebord formant feuillure 5 et constituant en quelque sorte un longeron qui s'étend le long d'une surface de plancher 6 qui doit recevoir un tapis ou une moquette 7.

Les flans 1 et 2 espacés verticalement comportent chacun une griffe ou analogue 8, 9 qui est dirigée vers le haut pour ce qui concerne le flan 1, et qui est dirigée vers le bas pour ce qui concerne le flan 2.

Les flans 1 et 2 sont non seulement décalés verticalement, mais également dans le plan horizontal, comme on le voit bien sur la figure 1, le raccordement des deux flans étant réalisé par une partie de pontage 10.

Cette partie 10, comme on le voit mieux sur la figure 2 est repliée sur elle-même et présente, en section transversale, sensiblement la forme d'un S qui constitue deux clips inversés. L'un 10a de ces clips permet, comme on le voit bien sur la figure 2, la retenue par clippage de la partie pontée 10 sur la feuillure 5, exactement comme les parties repliées 3, tandis que l'autre clip 10b permet la retenue d'un profilé de garniture 11 par sa partie 11a, lequel profilé recouvre les agrafes de fixation du tapis 7, le long de la feuillure 5.

Il est en outre observé ici que, les griffes 8 et 9 appartenant respectivement aux flans 1 et 2 pourraient être réalisées autrement que par repliement desdits flans, comme on le voit sur la figure 1.

L'agrafe qui vient d'être décrite pourrait comporter une poignée de manoeuvre (non représentée) pour faciliter le transport et la manipulation du tapis 7, avant son clippage sur la feuillure 5.

Mais, pour une meilleure compréhension de l'invention, on décrira ci-après le montage et les avantages de l'agrafe, en se reportant plus particulièrement à la figure 3.

On insère tout d'abord la tranche du tapis 7 entre les deux flans 1 et 2, comme on le voit sur la figure 3, puis, à l'aide des doigts on fait subir à l'agrafe une rotation, de manière que les flans 1 et 2 deviennent parallèles au tapis, ce qui permet l'incrustation des griffes ou dents 8 et 9 dans les deux faces du tapis 7.

Cette liaison ainsi effectuée, on peut manipuler aisément le tapis 7 auquel sont fixées plusieurs agrafes et réaliser facilement sa fixation par clippage des parties 3 et 10 sur la feuillure 5.

On a donc réalisé suivant l'invention une agrafe qui n'exige aucun perçage préalable dans la tôlerie et dans le tapis, ce qui résoud les problèmes d'étanchéité, et qui assure un maintien solide du tapis sur le plancher après montage, c'est-à-dire qui ne permet aucun baillement ni glissement du tapis 7 par rapport au plancher, puisque le tapis, après fixation, sera fermement accroché par ses deux faces aux griffes 8, 9 de l'agrafe elle-même fixée par clippage sur la feuillure 5.

Bien entendu, l'invention n'est nullement limitée au mode de réalisation décrit et illustré qui n'a été donné qu'à titre d'exemple.

Une telle agrafe peut être utilisée avec des tapis ou moquettes de différentes natures et épaisseurs, et l'agrafe pourrait comporter plus de deux flans tels que 1 et 2.

## Revendications

1. Agrafe de fixation d'un élément tel que par exemple un tapis ou analogue (7) sur une surface telle que par exemple un plancher de véhicule (6), et du type comprenant une première partie (3) repliée sur elle-même et apte à se clipper sur un rebord formant par exemple une feuillure (5), et une deuxième partie raccordée orthogonalement à la première partie et apte à retenir ledit élément sur ladite surface, caractérisée en ce que ladite deuxième partie se compose de deux flans (1, 2) espacés et décalés dans le plan vertical et horizontal, ces deux flans étant séparés et raccordés par une partie de pontage (10) qui permet l'insertion de la tranche de l'élément (7) entre les deux flans (1, 2) puis leur fixation sur ledit élément par mise en parallèle des deux flans avec l'élément (7) sous l'effet d'une rotation de l'agrafe, des griffes (8, 9) associés aux flans s'accrochant à l'élément.

2. Agrafe selon la revendication 1, caractérisée en ce que la partie de pontage (10) est repliée sur elle-même et présente sensiblement en section transversale la forme d'un S constituant deux clips inversés (10a, 10b) permettant respectivement la retenue de la partie de pontage sur la feuillure (5) et la retenue d'un élément constituant par exemple un profilé de garniture (11).

3. Agrafe selon la revendication 1 ou 2, caractérisée en ce qu'elle est munie d'un système de manoeuvre, tel que par exemple une poignée.

4. Agrafe selon la revendication 1, caractérisée en ce que chaque flan (1, 2) comporte au moins une griffe (8, 9) réalisée par repliement du flan.

## Ansprüche

1. Klammer zur Befestigung eines Elementes wie zum Beispiel eines Teppiches oder dergleichen (7) an einer Fläche wie zum Beispiel einem Fahrzeugfussboden (6) und der Gattung umfassend einen ersten auf sich selbst zurückgebogenen Teil (3), der fähig ist, auf eine, zum Beispiel einen Falz (5) bildende, Randleiste aufgeklemmt zu werden und einen, senkrecht an dem ersten Teil angeschlossenen, zweiten Teil, der fähig ist, das besagte Element an der besagten Fläche zurückzuhalten, dadurch gekennzeichnet, dass der besagte zweite Teil aus zwei, im Abstand von einander und in der senkrechten und waagerechten Ebene versetzt angeordneten, Plattenteilen (1, 2) besteht, wobei diese beiden Plattenteile durch ein Brückenteil (10) getrennt und verbunden sind, welcher die Einführung der Kante des Elementes (7) zwischen den beiden Plattenteilen (1, 2) und anschliessend deren Befestigung an dem besagten Element durch Gleichausrichten der beiden Plattenteile mit dem Element (7) unter der Wirkung einer Drehung der Klammer gestattet, wobei den Plattenteilen zugeordnete Klauen (8, 9) sich an dem Element einhacken.

2. Klammer nach Anspruch 1, dadurch gekennzeichnet, dass der Brückenteil (10) auf sich selbst zurückgebogen ist und im Querschnitt im wesentlichen die Gestalt eines S aufweist, welches zwei, jeweils das Zurückhalten des Brückenteils an dem Falz (5) und das Zurückhalten eines, zum Beispiel ein Besatzprofil (11) bildenden, Elementes ermöglichende, umgekehrte Klemmen (10a, 10b) bildet.

3. Klammer nach Anspruch 1 oder 2, dadurch gekennzeichnet, dass sie mit einem Betätigungssystem wie zum Beispiel einem Handgriff versehen ist.

4. Klammer nach Anspruch 1, dadurch gekennzeichnet, dass jeder Plattenteil (1, 2) wenigstens eine, durch Zurückbiegen des Plattenteils gebildete, Klaue (8, 9) aufweist.

## Claims

1. Clip for the fastening of an element such for example as a carpet or the like (7) onto a surface such for example as a vehicle floor (6) and of the type comprising a first portion (3) folded back on itself and adapted to be clipped onto a flange forming for example a ledge (5) and a second portion orthogonally connected to the first portion and adapted to retain the said element onto the said surface, characterized in that the said second portion consists of two panels (1, 2) spaced and offset in the vertical and horizontal planes, these two panels being separated and connected by a bridging portion (10) which allows the insertion of the edge of the element (7) between both panels (1, 2) and then their fastening onto the said element by putting both panels into parallel relationship with the element (7) under the effect of a rotation of the clip, claws (8, 9) associated with the panels clinging to the element.

2. Clip according to claim 1, characterized in that the bridging portion (10) is folded back on itself and exhibits in cross-section substantially the shape of an S forming two inverted clips (10a, 10b) allowing the retaining of the bridging portion onto the ledge (5) and the retaining of an element constituting for example a trimming profile (11), respectively.

3. Clip according to claim 1 or 2, characterized in that it is provided with a handling system such for example as a handle.

4. Clip according to claim 1, characterized in that each panel (1, 2) comprises at least one claw (8, 9) made through the folding back of the panel.

*Fig. 2*

*Fig. 1*

*Fig. 3*